# EUROPEAN PATENT APPLICATION

(11) **EP 1 538 839 A1**
(43) Date of publication of application: **08.06.2005**
(21) Application number: 04028414.3
(22) Date of filing: 01.12.2004
(51) Int. Cl.: H04N 7/173

(54) **System and method of operating the system that prevents multiple channels from continuously being sent to the same set top box**

(30) Priority: 03.12.2003 US 726907
(71) Applicant: Advanced Fibre Communications, Inc., Petaluma, CA 94954 (US)
(72) Inventor: Tsz-Chiu Wong, Allen, San Jose, CA 95129 (US); Cheng, Zhidan, Sunnyvale, CA 94089 (US)
(74) Representative: Knauer, Joachim Dr.

(57) **Abstract**

A router is connected to a number of groups, such as xDSL modems, that each have a number of group members, such as set top boxes. When a member of the group identifies a new subscribed-to channel that is to be sent to the member, the router insures that multiple channels are not continuously sent to the same group member.

## Description

### BACKGROUND OF THE INVENTION

### 1. Field of the Invention.

The present invention relates to a system and a method of operating the system according to the preamble of claims 1 and 11, respectively. The system and method respond to channel change requests from a set top box and, more particularly, prevent multiple channels from continuously being sent to the same set top box.

### 2. Description of the Related Art.

A set top box is a device that provides a large number of television channel selections to a user. The set top box, which can be connected in parallel with other set top boxes, is connected to a router via a modem, such as an ADSL modem. The router receives a large number of television channels, and routes a specific television channel to the set top box in response to the selections made by the user.

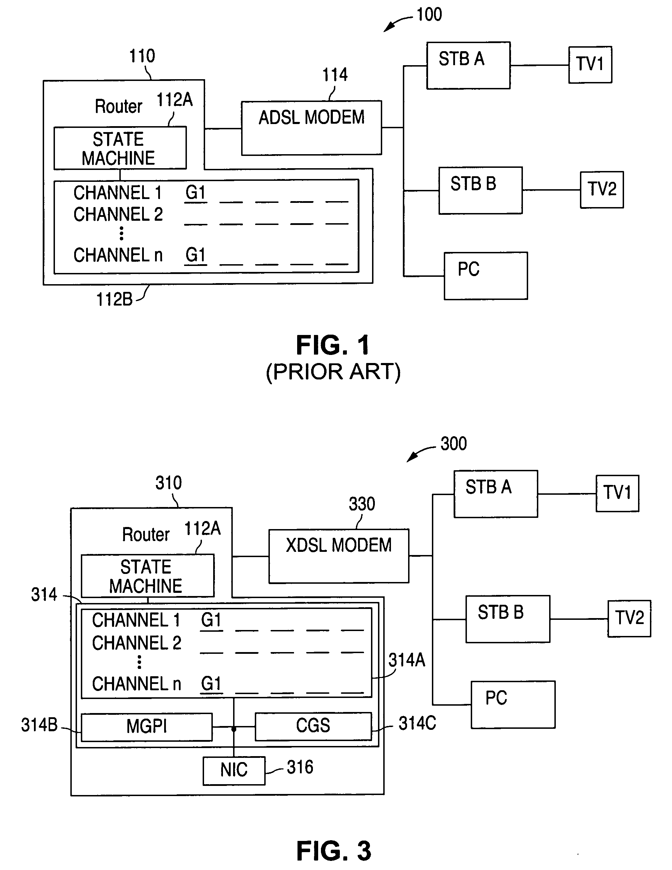

FIG. 1 shows a block diagram that illustrates a prior-art communications network 100. As shown in FIG. 1, network 100 includes a router 110, such as the Telliant 5000 Central Office System manufactured by Advanced Fiber Communications. Router 110 has a state machine 112A and a channel table 112B that is connected to state machine 112A. Channel table 112B lists a series of television channels (Channel 1-Channel n) that are provided by the router. In addition, channel table 112B maintains a subscriber list for each of the television channels.

As further shown in FIG. 1, network 100 includes an ADSL modem 114 that is connected to router 110. ADSL modem 114, which is located at a customer premise (CP), has an input port that receives telephonic signals and data packets from, and transmits telephonic signals and data packets to, router 110. Further, modem 114 has a plain old telephone service (POTS) port connected to a residential telephone (not shown), and a data port.

As further shown in FIG. 1, network 100 also includes a first set top box STBA that is connected to the data port, a second set top box STBB that is connected to the data port, and a personal computer PC that is connected to the data port. Set top boxes STBA and STBB (and modem 114) form a group (modem 114 provides the physical group interface). Although not shown, other groups of set top boxes are typically connected to router 110 via corresponding modems. In addition, network 100 includes two televisions TV1 and TV2 that are connected to the set top boxes STBA and STBB, respectively.

ADSL modem 114 is configured to deliver a first television channel to set top box STBA, and a second different television channel to set top box STBB. Each television channel requires a bandwidth of approximately 3.6 Mbps. Thus, 7.2 Mbps of bandwidth are required to support the two television channels. In the FIG. 1 example, modem 114 is also configured to provide approximately 0.8 Mbps of bandwidth for PC data communications. As a result, modem 114 has a maximum data rate of approximately 8 Mbps.

In operation, when set top box STBA is turned on, set top box STBA is subscribed to receive a selected television channel which, when television TV1 is also turned on, is displayed on the television screen. A user changes the channel received by set top box STBA and displayed by television TV1 by entering commands, usually via an infra-red remote, into set top box STBA.

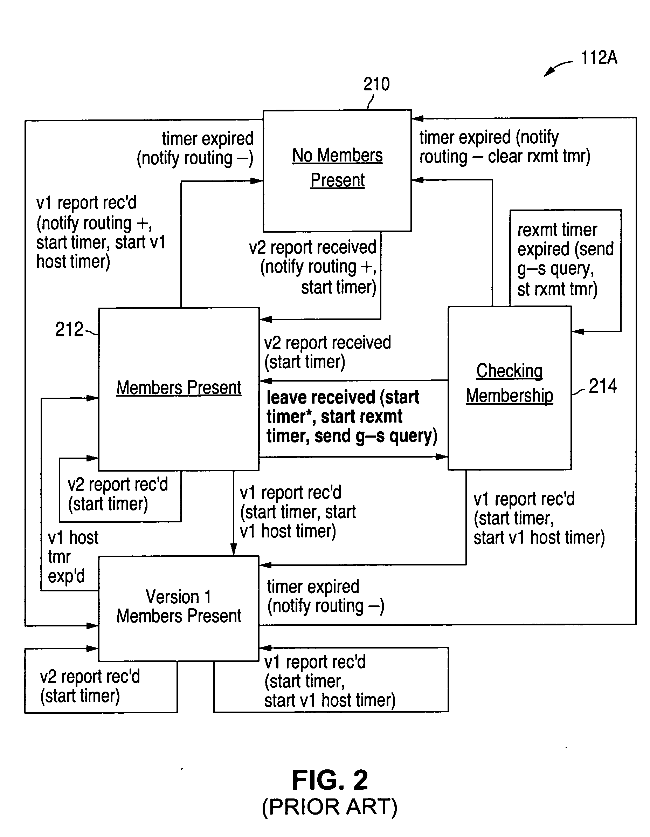

FIG. 2 shows a block diagram that illustrates the operation of state machine 112A. State machine 112A implements the internet group management protocol - version two (IGMPv2), and can be utilized in router 110 to route multicast data that represents television channels to the set top boxes.

As shown in FIG. 2, state machine 112A includes a No Members Present module 210, a Members Present module 212, and a Checking Membership module 214. (State machine 112A also includes a Version 1 Members Present module that provides backward compatibility and is not further discussed.)

In operation, when all of the set top boxes STB connected to router 110 are turned off, No Members Present module 210 of state machine 112A waits to detect a membership report. In addition, channel table 112B of router 110 is empty.

When set top box STBA turns on, the box automatically subscribes to a particular television channel, e.g., the channel that was subscribed to when the box was last turned off. In the subscription process, set top box STBA outputs an unsolicited version two (V2) membership report to router 110 that identifies the subscribed-to television channel.

When state machine 112A receives the unsolicited V2 membership report, state machine 112A passes the report to Members Present module 212 where state machine 112A places the group that includes set top box STBA in channel table 112B in the subscriber list of the subscribed-to channel, and notifies the routing circuitry to transmit the identified subscribed-to channel to set top box STBA.

Thus, when set top box STBA is a part of a first group G1 of a series of groups G1-Gn and is also subscribed to channel 1, state machine 112A adds first group G1 to the subscriber list of channel 1 when the unsolicited V2 membership report is received. FIG. 1 shows an example of group G1 added to table 112B to the subscriber list of channel 1. (In this example, groups G2-Gn are turned off and, thus, are not subscribed to any channel. As a result, groups G2-Gn are not shown in table 112B.)

In addition to notifying the routing circuitry, state machine 112A also starts a general query timer that measures a query interval. When the query timer expires, indicating that the query interval has ended, state machine 112A outputs a general query to the groups in the subscription lists of the channels. The general query includes a maximum response time. In addition to outputting the general query, state machine 112A starts a response timer that measures the maximum response time.

In response to the general query, the groups output V2 membership reports. In the present example, set top box STBA responds to a general query by outputting a V2 membership report representing first group G1 that indicates that set top box STBA remains connected to the subscribed-to-channel.

After state machine 112A receives the V2 membership report from set top box STBA, state machine 112A again starts the general query timer to measure the next query interval. On the other hand, if set top box STBA has been turned off, state machine 112A receives no response and the response timer expires. In this case, state machine 112A passes the group and channel to No Members Present module 210 where state machine 112A removes group G1 (that includes set top box STBA) from table 112B from the subscription list of the subscribed-to channel.

When first set top box STBA remains on and second set top box STBB turns on, the second box automatically subscribes to a particular television channel. As above, in the subscription process, set top box STBB outputs an unsolicited version two (V2) membership report to router 110 that identifies the subscribed-to television channel.

When state machine 112A receives the unsolicited V2 membership report from set top box STBB, state machine 112A passes the report to Members Present module 212 where state machine 112A places group G1 in channel table 112B in the subscriber list of the subscribed-to channel, and notifies the routing circuitry to transmit the subscribed-to channel to set top box STBB.

Thus, when set top box STBB is subscribed to channel n, state machine 112A adds group G1 to channel table 112B to the subscriber list of channel n. In addition, as above, state machine 112A measures a query interval for set top box STBB. FIG. 1 shows an example of group G1 added to channel table 112B in the subscriber list of channel n.

When a user of set top box STBA desires to change channels, such as from channel 1 to channel 2, set top box STBA outputs a leave message to router 110 to indicate that set top box STBA is leaving channel 1, followed by a V2 membership report that indicates that set top box STBA is now subscribed to, for example, channel 2.

However, before router 110 can stop sending channel 1, router 110 must make sure that another set top box in the same group is not receiving the same channel. Thus, when router 110 detects the leave message, state machine 112A passes the leave report to Checking Membership module 214 where state machine 112A outputs a group specific query to the members (the first and second set top boxes) of first group G1 to determine if any member (set top box) of first group G1 is subscribed to channel 1. In addition, state machine 112A also sets a group specific query timer and a retransmit timer.

The retransmit timer can be an integer multiple of the group specific timer. For example, the retransmit timer can have a value of two, while the group specific timer can have a value of four. When the retransmit timer expires, state machine 112A retransmits the group specific query and resets the retransmit timer. Thus, in the above example, the group specific query is transmitted twice before the group specific timer expires. The retransmission is a redundancy feature that minimizes the likelihood that lost or damaged packets will prevent the group specific query from being received.

In the present case, since none of the members of first group G1 are subscribed to the first channel (the first set top box is subscribed to the second channel, and the second set top box is subscribed to the nth channel), state machine 112A receives no response to the group specific query, and the group specific query timer expires.

(When both the first and second set top boxes STBA and STBB are subscribed to the same television channel, e.g., channel 1, and set top box STBA leaves channel 1 for another channel, first group G1 responds to the group specific query, thereby indicating that set top box STBB remains subscribed to channel 1. In this case, router 110 continues to send channel 1 to set top box STBB.)

When the group specific timer expires, state machine 112A passes the expiration to No Members module 210 where state machine 112A notifies the routing circuitry to stop sending the previously subscribed-to channel (channel 1) to first group G1 (that includes set top box STBA). In addition, state machine 112A also removes first group G1 from the subscription list of the previously subscribed-to channel (channel 1) in table 112B, and clears the retransmit timer.

When state machine 112A receives the V2 membership report that identifies channel 2 as the new subscribed-to channel, state machine 112A passes the report to Members Present module 212 where state machine 112A places the group that includes set top box STBA in the subscriber list of the subscribed-to channel, and notifies the routing circuitry to transmit the subscribed-to channel to set top box STBA. Thus, when set top box STBA is subscribed to channel 2, state machine 112A adds first group G1, which includes set top box STBA, to the subscriber list of channel 2.

One problem with the operation of state machine 112A is that state machine 112A can not detect when a leave message has been lost. Thus, when a set top box changes channels by first sending a leave message and then sending a V2 membership report that indicates the new subscribed-to channel, and state machine 112A fails to receive the leave message, state machine 112A sends both channels, the previously subscribed-to channel and the new subscribed-to channel, to the same set top box.

For example, both channel 1 and channel 2 can be sent to set top box STBA if the channel 1 leave message has been lost. Thus, there is a need for a router and a method of operating the router that prevents multiple channels from being continuously sent to the same set top box as a result of a lost leave message.

### SUMMARY OF THE INVENTION

The present invention provides a system and a method of operating the system with the features of claims 1 and 11, respectively. According thereto, multiple channels are prevented from being continuously sent to the same set top box as a result of a lost leave message. Further embodiments are defined in the dependent claims and inferable from the following description.

A better understanding of the features and advantages of the present invention will be obtained by reference to the following detailed description and accompanying drawings that set forth an illustrative embodiment in which the principles of the invention are utilized.

### BRIEF DESCRIPTION OF THE DRAWINGS

FIG. 1 is a block diagram illustrating a prior-art communications network 100.
FIG. 2 is a block diagram illustrating the operation of state machine 112A.
FIG. 3 is a block diagram illustrating an example of a communications network 300 in accordance with the present invention.
FIGs. 4A-4B is a flow chart illustrating an example of a method 400 of responding to a V2 membership report that indicates a new subscribed-to channel in accordance with the present invention.

### DETAILED DESCRIPTION OF THE INVENTION

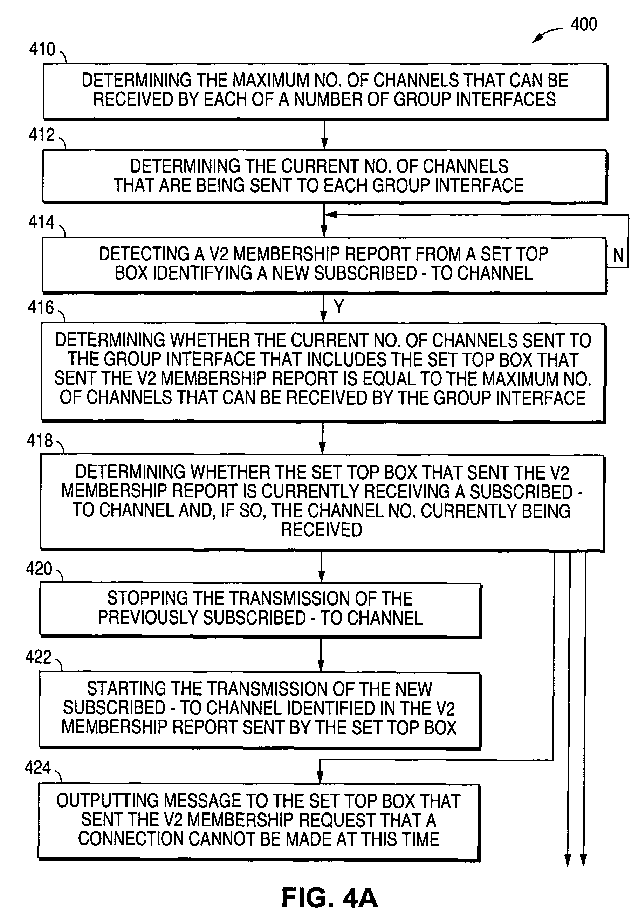

FIG. 3 shows a block diagram that illustrates an example of a communications network 300 in accordance with the present invention. As shown in FIG. 3, network 300 includes a router 310 that has a state machine 312 and a memory 314 that includes and a channel table 314A that is connected to state machine 312A. Channel table 314A lists a series of television channels (Channel 1-Channel n) that are provided by the router. In addition, channel table 314A includes a subscriber list for each television channel that lists the groups that are subscribed to the channel.

Memory 314 also has a number of first registers 314B that store values that represent the maximum number of channels that can be received by the groups, known as the maximum group per interface (MGPI) values, and a number of second registers 314C that store values that represent the current number of different channels that are transmitted to the groups, known as the current group subscribed (CGS) values.

For example, if network 300 included only one group, such as the group that includes set top boxes STBA and STBB, then router 310 has a first register 314B that corresponds with the group and holds a value of two, since the maximum number of channels that can be received by the group is two (one channel for set top box STBA and one channel for set top box STBB).

In addition, if both set top boxes STBA and STBB are turned on and receiving channels, router 310 has a second register 314C that corresponds with the group and holds a value of two, since two channels are currently being sent (one channel to set top box STBA and one channel to set top box STBB).

Further, router 310 includes a network interface card (NIC) 316 that is connected to memory 314. NIC 116 provides a connection to a networked computer to transfer information, such as status information, out of router 310, and to transfer information, such as control signals, into router 310.

As additionally shown in FIG. 3, network 300 also includes an xDSL modem 330 that is located at a customer premise (CP). Modem 330 has an input port that receives telephonic signals and data packets from, and transmits telephonic signals and data packets to, router 310. Further, modem 330 has a plain old telephone service (POTS) port, and a data port.

As further shown in FIG. 3, network 300 also includes a number of set top boxes, such as a first set top box STBA that is connected to the data port of modem 330, and a second set top box STBB that is connected to the data port of modem 330. In addition, network 300 includes a number of personal computers, such as a personal computer PC that is connected to the data port of modem 330. In addition, a number of televisions, televisions TV1 and TV2 in this example, are connected to the set top boxes STBA and STBB, respectively.

xDSL modem 330 is configured to deliver a number of television channels while at the same time providing bandwidth for PC data communications. For example, xDSL modem can be configured to deliver a first television channel to set top box STBA, and a second different television channel to set top box STBB. In addition, modem 330 can be configured to provide, for example, 0.8 Mbps of bandwidth for PC data communications.

In operation, state machine 312 operates the same as state machine 112A except that state machine 312 responds differently to a V2 membership report that indicates a new subscribed-to channel. When set top box STBA is turned on, set top box STBA is subscribed to receive a television channel which, when television TV1 is also turned on, is displayed on the television screen.

A user changes the channel received by set top box STBA and displayed by television TV1 by entering commands, such as via an infra-red remote, into set top box STBA. In response to the commands, the set top box changes channels by first sending a leave message and then sending a V2 membership report that indicates the new subscribed-to channel.

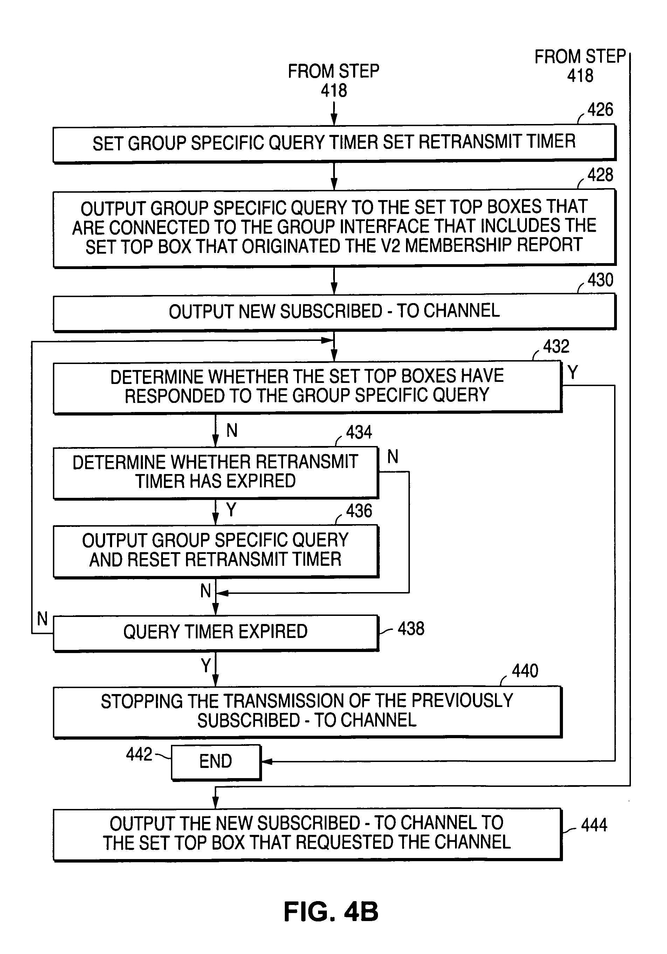

FIGs. 4A-4B show a flow chart that illustrates an example of a method 400 of responding to a V2 membership report that indicates a new subscribed-to channel in accordance with the present invention. Method 400 can be executed by, for example, state machine 312 of router 310.

As shown in FIGs. 4A-4B, method 400 begins in step 410 by determining the maximum number of channels that can be received by each of a number of group interfaces, such as a number of xDSL modems 330. For example, a service technician can enter the MGPI value for the modem 330 into a first register 314B of router 310.

Following this, method 400 moves to step 412 to determine the current number of channels that are being sent to each group interface. For example, router 310 can determine that X channels are currently being sent to modem 330, and utilize, for example, a second register 314C to store a CGS value that indicates the current number of channels that are being sent to modem 330.

Next, method 400 moves to step 414 to detect a V2 membership report from a set top box STB that identifies a new subscribed-to channel. When a V2 membership report identifying a new subscribed-to channel has been received from a set top box, method 400 moves to step 416 to determine whether the current number of channels sent to the group interface that includes the set top box that sent the V2 membership report (the CGS value) is equal to the maximum number of channels that can be received by the group interface that includes the set top box that sent the V2 membership report (the MGPI value).

For example, when set top box STBA is the source of the V2 membership report, method 400 determines if the CGS value of modem 330 is equal to the MGPI value of modem 330. In this case, method 400 reads the MGPI value from a register 314B and the CGS value from a register 314C to determine whether the maximum number of channels is equal to the current number of channels that are being sent to the group interface.

When the current number of channels as indicated by the CGS value and the maximum number of channels as indicated by the MGPI value are equal, method 400 moves to step 418 to determine whether the set top box STB that is the source of the V2 membership report is currently receiving a subscribed-to channel and, if so, the channel number currently being received. For example, when set top box STBA is the source of the V2 membership report, state machine 312 can look through table 314A to determine whether set top box STBA is currently receiving a subscribed-to channel and, if so, the channel number being received.

When the source of the V2 membership report is currently receiving a previously subscribed-to channel, method 400 moves to step 420 to stop the transmission of the previously subscribed-to channel, and then to step 422 to output the new subscribed-to channel to the set top box STB that requested the channel.

For example, when set top box STBA is the source of a V2 membership report that identifies channel two as a new subscribed-to channel, and is currently receiving a previously subscribed-to channel, such as channel one, method 400 moves to step 420 to stop the transmission of previously subscribed-to channel one to set top box STBA, and then to step 422 to start the transmission of new subscribed-to channel two (the channel identified in the V2 membership report) to set top box STBA.

Referring again to step 418, when the source of the V2 membership report does not currently receive a subscribed-to channel, method 400 moves to step 424 to end. As a result, method 400 drops the V2 membership report because the maximum number of channels is already being sent.

Referring again to step 416, when the current number of channels as indicated by the CGS value is less than the maximum number of channels as indicated by the MGPI value, method 400 moves from step 416 to step 426 where method 400 sets a group specific timer and a retransmit timer. For example, router 310 can set a group specific query timer and a retransmit timer.

Following this, method 400 moves to step 428 where method 400 outputs a group specific query to the set top boxes that are connected to the group interface that includes the set top box that originated the V2 membership report. For example, when set top box STBA originated the V2 membership report, router 310 can output a group specific query to set top box STBB to determine if set top box STBB is receiving the subscribed-to channel.

As above, the retransmit timer can be an integer multiple of the group specific timer to allow the group specific query to be transmitted multiple times before the group specific query timer expires. The steps associated with the retransmit timer are optional. The retransmit timer adds redundancy to minimize the likelihood that lost or damaged packets will prevent the group specific query from being received.

Next, method 400 moves to step 430 to output the new subscribed-to channel identified in the V2 membership report to the set top box STB that originated the V2 membership report. For example, when set top box STBA originates a V2 membership report identifying channel two as a new subscribed-to channel, router 310 outputs channel two to set top box STBA.

After the channel identified in the V2 membership report has been sent to the set top box STB that originated the V2 membership report, method 400 moves to step 432 to determine whether a set top box has responded to the query, indicating that a set top box is connected to the subscribed-to channel. When none of the set top boxes has responded to the group specific query, method 400 moves to step 434 to determine whether the retransmit timer has timed out.

If the retransmit timer has timed out, method 400 moves to step 436 to again output the group specific query and reset the retransmit timer. Following this, method 400 moves to step 438 to determine whether the group specific query timer has timed out. In addition, when the retransmit timer has not timed out in step 434, method 400 moves to step 438.

If the group specific query timer has not timed out, method 400 returns to step 432. Method 400 continues to loop until the group specific query timer expires or a set top box responds to the group specific query. When the group specific timer has expired, method 400 moves to step 440 where method 400 notifies the routing circuitry to stop sending the previously subscribed-to channel. In addition, method 400 also removes the group from the subscription list of the channel in table 314A, and clears the retransmit timer.

When a set top box responds to the group specific query, thereby indicating that another set top box is receiving, the subscribed-to channel, method 400 moves from step 432 to step 442 to end. In this case, the router continues to send the subscribed-to channel to the other set top box.

One of the advantages of method 400 is that method 400 prevents multiple channels from being sent to the same set top box when a leave message has been lost. When both set top boxes are turned on and one set top box changes channels, a lost leave message is handled by identifying the previously subscribed-to channel, stopping the transmission of the previously subscribed-to channel, and outputting the new subscribed-to channel.

When only one set top box is turned on and the set top box changes channels, a lost leave message is handled by identifying the previously subscribed-to channel, outputting a group specific query, and then outputting the new subscribed-to channel. Since the group specific query will not receive a V2 membership report from the set top box identifying the previously subscribed-to channel, method 400 terminates the transmission of the previously subscribed-to channel.

As described, the new subscribed-to channel is sent after the group specific query has been sent but before the group specific timer has expired. In this case, two channels are sent to the same set top box for a very short period of time until the group specific query timer times out.

Alternately, the transmission of the new subscribed-to channel can be held until the group specific query timer expires (such that step 430 is moved and occurs between steps 438 and 440, and step 428 feeds step 432), or until a response to the group specific query is received (such that step 430 is moved and occurs between steps 432 and 442, and step 428 feeds step 432), thereby insuring that only one channel is sent to the set top box.

It should be understood that the above descriptions are examples of the present invention, and that various alternatives of the invention described herein may be employed in practicing the invention.

## Claims

1. A system (300) comprising a state machine (312), **characterized by**
a first register (314B);
a second register (314C); and in that
the state machine (312) is connected to the first and second registers (314B, 314C) and designed to:
determine a maximum number of channels that can be received by an interface connected to the system, and to store the maximum number in the first register (314B);
determine a current number of different channels that are being sent to the interface, and to store the current number in the second register (314C);
detect a new channel message from a set top box (STBA, STBB) connected to the interface, the new channel message indicating a new subscribed-to channel.

2. The system of claim 1, **characterized in that** the state machine (312) is designed to determine if the maximum number is equal to the current number when the new channel message is detected.

3. The system of claim 1 or 2, **characterized in that** the state machine (312) is designed to determine whether the set top box (STBA, STBB) is currently receiving a previously subscribed-to channel.

4. The system of one of the claims 1 to 3, **characterized in that** the state machine (312) is designed to stop a transmission of the previously subscribed-to channel, when the maximum number is equal to the current number, and the set top box is currently receiving the previously subscribed-to channel.

5. The system of claim 4, **characterized in that** the state machine (312) is designed to output the new subscribed-to channel after the previously subscribed-to channel has been stopped.

6. The system of one of the claims 1 to 5, **characterized in that** the set top box (STBA, STBB) is a member of a group.

7. The system of one of the claims 1 to 6, **characterized in that** the state machine (312) is designed to output a group specific query to the group, when the maximum number is not equal to the current number.

8. The system of claim 7, **characterized in that** the state machine (312) is designed to output the new subscribed-to channel to the set top box (STBA, STBB) after the group specific query has been output, but before a group specific query timer has expired.

9. The system of claim 7, **characterized in that** the state machine (312) is designed to output the new subscribed-to channel to the set top box (STBA, STBB) after the group specific query has been output, and after a group specific query timer has expired.

10. The system of one of the claims 1 to 9, **characterized in that** the state machine (312) is designed to drop the new channel message, when the maximum number is equal to the current number, and the set top box (SSTBA, STBB) is not currently receiving a subscribed-to channel.

11. A method of operating a system (300) connected to an interface, the system (300) including a first register (314B) and a second register (314C), **characterized by**:
determining (410) a maximum number of channels that can be received by the interface, and storing the maximum number in the first register (314B);
determining (412) a current number of different channels that are being sent to the interface, and storing the current number in the second register (314C); and
detecting (414) a new channel message from a set top box (STBA, STBB) connected to the interface, the new channel message indicating a new subscribed-to channel.

12. The method of claim 11, **characterized by** the step of, when the new channel message is detected, determining (416) if the maximum number is equal to the current number.

13. The method of claim 11 or 12, **characterized by** the step of determining (418) whether the set top box (STBA, STBB) is currently receiving a previously subscribed-to channel.

14. The method of one of the claims 11 to 13, **characterized by** the steps of:
when the maximum number is equal to the current number, and the set top box (STBA, STBB) is currently receiving the previously subscribed-to channel,
stopping (420) a transmission of the previously subscribed-to channel; and
outputting the new subscribed-to channel after the previously subscribed-to channel has been stopped.

15. The method of one of the claims 11 to 14, **characterized by** using a set top box (STBA, STBB) that is a member of a group, and further comprising the step of, when the maximum number is not equal to the current number, outputting (428) a group specific query to the group.

16. The method of claim 15, **characterized by** outputting the new subscribed-to channel after the group specific query has been output, but before a group specific query timer has expired.

17. The method of claim 15, **characterized by** outputting the new subscribed-to channel after the group specific query has been output, and after a group specific query timer has expired.

18. The method of one of the claims 11 to 17, **characterized by**, when the maximum number is equal to the current number, and the set top box (STBA, STBB) is not currently receiving a subscribed-to channel, dropping the channel message.
